# EUROPEAN PATENT SPECIFICATION

(11) **EP 2 244 989 B1**
(45) Date of publication and mention of the grant of the patent: **20.07.2016**
(21) Application number: 08856408.3
(22) Date of filing: 03.12.2008
(51) Int. Cl.: C04B 35/468, C04B 35/626, B28B 1/24, H01C 7/02, H05B 3/14

(54) **INJECTION MOLDED PTC-CERAMICS**
SPRITZGEGOSSENE PTC-KERAMIKEN
CÉRAMIQUES CTP MOULÉES PAR INJECTION

(30) Priority: 05.12.2007 US 950724
(43) Date of publication of application: 03.11.2010
(73) Proprietor: Epcos AG, 81669 München (DE)
(72) Inventor: IHLE, Jan, A-8071 Grambach (AT); KAHR, Werner, A-8530 Deutschlandsberg (AT)
(74) Representative: Epping - Hermann - Fischer
(86) International application number: PCT/EP2008/066720
(87) International publication number: WO 2009/071588

(56) References cited:
- EP-A- 0 415 428
- DE-A1- 2 753 766
- GB-A- 2 097 778
- JP-A- 2001 181 058
- US-A- 5 340 510
- US-A- 6 144 286
- JAYANTHI S ET AL: "Effect of segregative additives on the positive temperature coefficient in resistance characteristics of n-BaTiO3 ceramics" JOURNAL OF MATERIALS SCIENCE: MATERIALS IN ELECTRONICS, KLUWER ACADEMIC PUBLISHERS, BO, vol. 17, no. 11, 1 November 2006 (2006-11-01), pages 883-897, XP019435460 ISSN: 1573-482X
- GENE H. HAERTLING: 'Ferroelectric Ceramics: History and Technology' JOURNAL OF THE AMERICAN CERAMIC SOCIETY vol. 82, no. 4, 01 April 1999, pages 797 - 818, XP055005860 DOI: 10.1111/j.1151-2916.1999.tb01840.x ISSN: 0002-7820

## Description

This disclosure relates to an injection molded body comprising a ceramic material with a positive temperature coefficient (PTC) at least in a certain range of temperature.

### BACKGROUND AND SUMMARY OF THE INVENTION

Molded bodies comprising a ceramic material are suitable for a wide range of applications. In particular, due to their refractory properties, many ceramic materials can beneficially be used in high temperature environments. Moreover, with ceramic elements having a positive temperature coefficient (PTC) at least in a certain range of temperature, the temperature of such environments can be> controlled.

The PTC-effect of ceramic materials comprises a change of the electric resistivity p as a function of the temperature T. While in a certain temperature range the change of the resistivity p is small with a rise of the temperature T, starting at the so-called Curie-temperature T_{C} the resistivity p rapidly increases with a rise of temperature. In this second temperature range, the temperature coefficient, which is the relative change of the resistivity at a given temperature, can be in a range of 50%/K up to 100%/K.

A molded body comprising a ceramic material can be formed by various techniques. In an extrusion technique a moldable mass comprising the ceramic material is pressed through a template. As a result, the thus formed molded body exhibits an axis and cross sections perpendicular to that axis which match the cross section of the template. In a dry powder pressing technique, a powder comprising the ceramic material is pressed into a molded body. By applying this technique, ceramic bodies with simple geometric shapes, e.g. block shaped bodies, can be generated.

Document EP-A-0 415 428 discloses a powder composition for semiconductive ceramics formed by press-molding. Document US-A-6 144 286 discloses a ceramic material for a PTC resistor. Document DE 27 53 766 A1 discloses a process for regulating the electrical properties of a PTC resistor. The article by Jayanthi S. et al: "Effect of segregative additives on the positive temperature coefficient in resistance characteristics of n-Bati0₃ ceramics" discloses a method for preparing a ceramic material. Document GB 2 097 778 A discloses a method for preparing a semiconductive barium titanate material for a PTC resistor. The article by Gene H. Haertling: "Ferroelectric Ceramics: History and Technology", Journal of the American Ceramic Society, vol. 82, no. 4, 1 April 1999 (1999-04-01), pages 797-818 gives an overview over applications of ferroelectric ceramics and production processes thereof.

Here, in one aspect, we describe a method for injection molding PTC-ceramics. By this method almost all kinds of complex shapes in a huge range of various dimensions can be produced. In the injection molding process, a so-called feedstock comprising a ceramic material is injected into a mold exhibiting the desired shape of the body. After that, further processing steps including the removal of a binder and sintering are carried out in order to obtain a solid molded body.

The fabrication process is designed such that the molded body exhibits the beneficial properties of the PTC-effect or at least some of its characteristic features. If the process is not carried out carefully, the resistivity ρ₂₅ at a temperature of 25 °C, for example, may be shifted to higher values.

In order to maintain the characteristic features of the PTC-effect, the PTC-ceramic material contains less than 10 ppm (parts per million) of metallic impurities. A suitable process for injection molding a PTC-ceramic material comprises the steps of
A) providing a feedstock for injection molding containing less than 10 ppm of metallic impurities,
B) injecting the feedstock into a mold,
C) removing a binder,
D) sintering the molded body and
E) cooling the molded body.

During the entire process, provisions have to be made in order to confine the metallic impurities to less than 10 ppm. For this purpose, the tools used during the process and which come into contact with the ceramic material have a low rate of abrasion such that the resulting molded body comprises less than 10 ppm of metallic impurities caused by the abrasion. The mold and other tools may be coated with a hard material. In one embodiment, this hard material comprises a hard metal like tungsten carbide.

In one embodiment, in step A) a suitable feedstock comprises a ceramic filler and a matrix for binding the filler, also referred to as the binder. The ceramic filler may for example be based on Bariumtitanate (BaTiO₃), which is a ceramic of the perovskite-typ (ABO₃).

It may have the chemical structure

Ba_{1-x-y}MₓD_{y}Ti_{1-a-b}NₐMn_{b}O₃,

wherein the parameters may be defined as follows:
x = 0 to 0.5;
y = 0 to 0.01;
a = 0 to 0.01 and
b = 0 to 0.01.

In this structure M stands for a cation of the valency two, such as for example Ca, Sr or Pb, D stands for a donor of the valency three or four, for example Y, La or rare earth elements, and N stands for a cation of the valency five or six, for example Nb or Sb.

Hence, a high variety of ceramic materials can be used, whereby the composition of the ceramic may be chosen with regard to the required electrical features of the resulting sintered ceramic.

The feedstock is injection moldable since the melting point of the matrix is lower than the melting point of the ceramic filler.

According to one embodiment, the matrix in the feedstock comprises a content of ≤ 20 percent by mass, such as a content of ≤ 12 percent by mass. This content reduces costs and burnout time of the matrix when it is removed before or during sintering. Furthermore, the low amount of matrix material in the feedstock helps to control dimensional variations during the burnout and to reduce shrinkage of the feedstock while it is sintered.

The matrix may, according to one embodiment, comprise materials chosen out of a group comprising wax, resins, thermoplastics and water soluble polymers. For example, low molecular weight polyethylene, polystyrene, paraffin, microcrystalline waxes, several copolymers and celluloses may be contained in the matrix. Additionally, the matrix may comprise at least one more component chosen out of a group comprising lubricants, plasticizers and anti-oxidants. For example, phthalate plasticizers or stearic acids as lubricant may be contained in the matrix.

The metallic impurities in the feedstock may comprise Fe, Al, Ni, Cr and W. Their content in the feedstock, in combination with one another or each respectively, is less than 10 ppm due to abrasion from tools employed during the preparation of the feedstock.

In one embodiment, a method for preparing a feedstock for injection molding comprises the steps of i) preparing a ceramic filler being convertible to PTC-ceramic by sintering, ii) mixing the ceramic filler with a matrix for binding the filler, and iii) producing a granulate comprising the filler and the matrix.

During the entire process, tools are used which have such a low degree of abrasion that a feedstock comprising less than 10 ppm of impurities caused by said abrasion is prepared.

Thus, preparation of injection moldable feedstocks with a low amount of abrasion caused metallic impurities is achieved without the loss of desired electrical features of the molded PTC-ceramic.

In step i), a ceramic filler may be prepared by mixing suitable raw materials, calcinating them and grounding them to a powder. During the calcination, which can be performed at temperatures of about 1100 °C for around two hours, a ceramic material of the structure Ba_{1-x-y}MₓD_{y}Ti_{1-a-b}NₐMn_{b}O₃ with x = 0 to 0.5, y = 0 to 0.01, a = 0 to 0.01 and b = 0 to 0.01 is formed, where M stand for a cation of the valency two, D a donor of the valency three or four and N a cation of the valency five or six. This ceramic material is grounded to a powder and dried to obtain the ceramic filler.

Suitable raw materials may comprise BaCO₃, TiO₂, Mn-containing solutions and Y-ion containing solutions, for example MnSO₄ and YO_{3/2}, and at least one out of the group of SiO₂, CaCO₃, SrCO₃, and Pb₃O₄. From these raw materials, for example, a ceramic material, which comprises a perovskite structure, of a composition such as (Ba_{0,3290}Ca_{0,0505}Sr_{0,0969}Pb_{0,1306}Y_{0,005}) (Ti_{0,502}Mn_{0,0007})O_{1,5045} can be prepared. A sintered body of this ceramic material has a temperature T_{C} of 122°C and - depending on the conditions during sintering - a resistivity range from 40 to 200 Ωcm.

According to an implementation of the method, step ii) is performed at a temperature of 100°C to 200°C. First, the ceramic filler and the matrix are mixed at room temperature, after that this cold mixture is put into a hot mixer heated to temperatures of 100°C to 200°C, e.g., between 120°C to 170°C, for example 160°C. The ceramic filler and the matrix which binds the filler are kneaded in the hot mixer to homogenous consistency at elevated temperatures. As a mixer or mixing device, a twin-roll mill or other kneading / crushing device may be used.

A twin-roll mill may comprise two counter-rotating differential speed rollers with an adjustable nip and imposes intense shear stresses on the ceramic filler and the matrix as they pass through the nip. Further, a single-screw or a twin-screw extruder as well as a ball mill or a blade-type mixer may be used for preparing the mixture containing the matrix and the ceramic filler.

In step iii), the mixture of matrix and ceramic filler can be cooled to room temperature and reduced to small pieces. The mixture hardens when it is cooled and by reducing it to small pieces a granulate of feedstock material is formed.

According to an implementation of the method, the tools used in method steps i), ii) and iii) comprise coatings of a hard material. The coating may comprise any hard metal, such as, for example, tungsten carbide (WC). Such a coating reduces the degree of abrasion of the tools when in contact with the mixture of ceramic filler and matrix and enables the preparation of a feedstock with a low amount of metallic impurities caused by said abrasion. Metallic impurities may be Fe, but also Al, Ni or Cr. When the tools are coated with a hard coating such as WC, impurities of w may be introduced into the feedstock. However, these impurities have a content of less than 10 ppm. It was found that in this concentration, they do not influence the desired electrical features of the sintered PTC-ceramic.

The metallic impurities of the feedstock may be detected by chemical analyzing methods, for example by inductively coupled plasma (IPC) spectrometry. IPC-spectrometry is a technique for elemental analysis which is applicable to most elements over a wide range of concentrations. Most elements of the periodic table can be analyzed. Samples have to be dissolved prior to analysis.

During step B), the feedstock may be injected into the mold at a high pressure, for example at a pressure of about 1000 bar.

In one embodiment, the removal of the binder in step C) and the sintering of the molded body in step D) are carried out consecutively. In that case, the binder can be removed by thermal pre-sintering. If the binder is water soluble, it can at least partially be removed by water solvation. As an example, by water solvation the binder content can be reduced from about 12 % to about 6 % of the feedstock mass. Afterwards a pre-sintering process can be carried out.

In a further embodiment, the removal of the binder in step C) and the sintering of the molded body in step D) are carried out simultaneously. In that case, the binder can be removed by sintering.

The sintering process in step D) may be carried out at a temperature in the range of 1250°C to 1400°C, e.g., in the range of 1300°C to 1350°C. In step E), the cooling rate may be between 1K/min up to 30K/min, favorably between 2K/min and 20K/min, in a temperature range from top temperature (1300°C to 1350°C) to 900°C.

Both, the sintering temperature and the rate of cooling directly affect the features of the PTC-effect like the resistivity ρ₂₅ or the slope of the p-T curve.

Other features will become apparent from the following detailed description when considered in conjunction with the accompanying drawings.

### BRIEF DESCRIPTION OF THE DRAWINGS

Figure 1 is a view of the resistivities p of PTC-ceramics comprising different amounts of impurities as a function of temperature T,
Figure 2 is a view of an embodiment of a molded body for heating fluids,
Figure 3 is a view of an embodiment of a molded body for heating tube sections.

### DETAILED DESCRIPTION

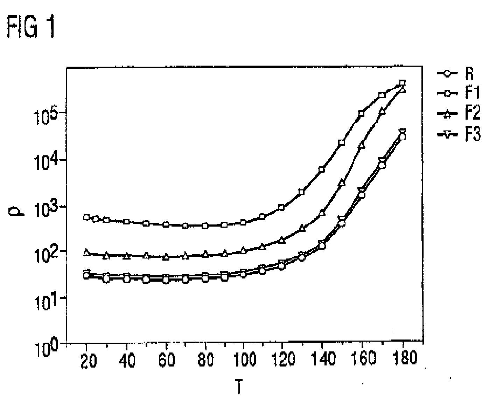

In Figure 1, p-T curves of PTC-ceramics are shown, wherein the resistivity p in Ωcm is plotted against the temperature T in °C.

Granulate R is a reference granulate prepared for dry pressing without kneading it under high shear rates. Thus, granulate R contains no or very few metallic impurities due to the preparation method without any abrasion of the tools. It exhibits resistivities of about 30 Ωcm for temperatures below the characteristic temperature T_{C} = 122°C and shows a steep slope of the p-T curve at temperatures above 122°C.

For the injection molded bodies F1, F2 and F3, the effect of the amount of metallic impurities of the ceramic material on the electrical properties can be seen from the respective curves. Feedstock F1 was prepared for injection molding with tools made of steel which were not coated with any abrasion preventing coating.

Feedstocks F2 and F3 were prepared for injection molding with tools comprising surface coatings which prevent abrasion leading to metallic impurities. In the preparation of the feedstock F3, all tools were coated with the hard metal WC, whereas in the preparation of feedstock F2 the tools were coated only partially such that the feedstock has been in contact with the steel of the tools during some method steps.

Therefore, the amount of impurities decreases from F1 to F2 and to F3. In F1 and F2 the amount of metallic impurities is higher than 10 ppm resulting in a shift of the resistivities to higher values in the entire measured temperature range from 20 °C to 180 °C.

When the amount of metallic impurities is sufficiently low, however, as is the case for F3, the curve approaches the reference curve R.

The characteristic features of the p-T curve of a ceramic material strongly depend on the chemical composition of the ceramic material. In other embodiments, the ceramic materials may comprise different chemical compositions than the ceramics used in Figure 1 and are characterized by different values of T_{C}, ρ₂₅ and of the slope of the p-T curve. The material may be chosen such that the Curie-temperature is in the range between -30 °C and 350°C. In other embodiments, the Curie-temperatures may even be outside this range.

Furthermore, not only the chemical composition of the feedstock, but also process parameters like the sintering temperature and the rate of the successive cooling of the molded body affect the height of the electrical resistivities.

As an example, the ceramic material of curve F3 in Figure 1 was sintered at a temperature of 1300°C and subsequently cooled rapidly. Due to the process parameters, ρ₂₅ is about 25 Ωcm. If the same material is sintered at a temperature of about 1350°C and subsequently cooled at a slower rate, the resistivity increases to a value of about 200 Ωcm. Generally, it can be observed that by higher sintering temperatures and higher cooling rates the p-T curves are shifted upwards.

In embodiments, depending on the chemical composition of the ceramic material, the resistivities ρ₂₅ of bodies sintered at low temperatures and at a high cooling rate are in the range of 3 to 10000 Ωcm. The exact values depend on the chemical composition of the ceramic material. At high sintering temperatures and low cooling rates the resistivities ρ₂₅ may be in the range of 5 to 30000 Ωcm. ρ_{C} may be in the range of 3 to 100 Ωcm at low sintering temperatures and fast cooling rates, which corresponds to a range of 5 to 500 Ωcm at high sintering temperatures and slow cooling rates. The use of other ceramic materials may also lead to resistivities far below or above the ranges given here.

The ceramic bodies showing the PTC-effect can be injection molded in almost all kinds of complex shapes and in a large variety of dimensions.

In particular, bodies can be molded which exhibit for every straight line through the body at least two cross sectional areas perpendicular to this line, which can not be accommodated on each other by a translation along this line. This is in contrast to other geometries, where the cross sections along an axis match the cross section of a template.

The injection molded body described herein may comprise a curved surface area. It may also comprise a combination of flat and curved surface areas. As an example, injection molded bodies may exhibit cone shaped, pyramidal shaped, cylindrical shaped or cuboidal shaped areas as well as any other shapes or any combination of different shapes. In one embodiment, the injection molded body comprises a basic shape which is twisted around an axis.

Moreover, the injection molded body may exhibit all kinds of irregular shapes. In one embodiment, the injection molded body exhibits for every straight line through the body at least two cross sectional areas perpendicular to this line, which can not be accommodated on each other by a translation and rotation along this line.

Such irregular shapes include protrusions, recesses and slits. The molded body may also comprise channels or holes of various shapes, e.g. a cone shaped hole. In one embodiment, the molded body comprises ribs at an outer or inner surface, for example inside an existing channel. The protrusions, recesses or slits may be devices for connecting the molded body to a further body or a housing, for example a connection thread or a flange.

In one embodiment, the injection molded body comprises at least one part of a surface area which is complementary to at least one part of the surface area of a further body or of a housing.

Such a complementary shape of the surface area may be constituted by dimensions which are adapted to the dimensions of a further body. Furthermore, the curvature of the surface area can be formed such that the molded body fits into a similarly curved housing. Alternatively or in addition to that, the molded body can constitute the housing for a further body.

The protrusions and recesses may be formed such that they fit into recesses or protrusions of a further body or a housing. In one embodiment, the molded body can be tightly attached to a further body. In an alternative embodiment, a cavity may exist between the molded body and a further body. With connection devices which are formed directly in the injection molding process a mechanical and thermal contact can be established.

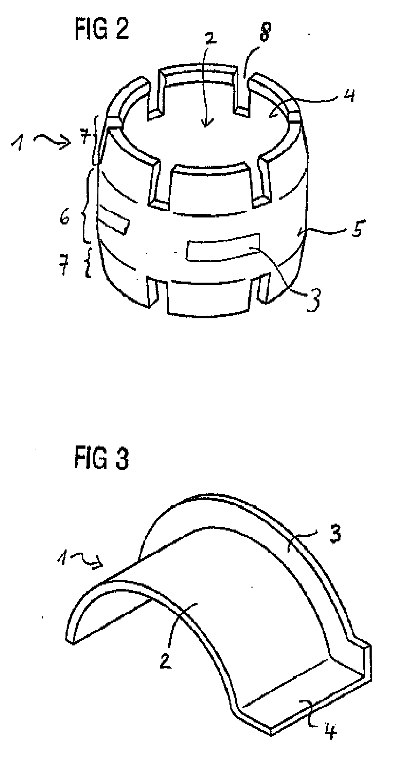

For an illustration, Figure 2 and Figure 3 show two examples of injection molded PTC-ceramics, which can be used as heating elements. As explained above, the shapes and dimensions of injection molded bodies are in no means constrained to the embodiments depicted here.

Figure 2 shows an injection molded body 1 comprising PTC-ceramics with a tubular shape. A fluid can pass through the existing channel 2 and can be heated by the PTC-ceramics. For that purpose, the molded body 1 exhibits electrical contacts 3 on its inner 4 and outer 5 surface areas. These contacts 3 may comprise metal stripes comprising Cr, Ni, Al, Ag or any other suitable material.

At least the inner surface 4 of the molded body 1 may additionally comprise a passivation layer to prevent interactions, such as chemical reactions, between the fluid and the PTC-ceramic or the inner electrical contacts. This passivation layer can for example comprise a low melting glass or nano-composite lacquer. The nano-composite lacquer can comprise one ore more of the following composites: SiO₂-polyacrylate-composite, SiO₂-polyether-composite, SiO₂-silicone-composite.

The presented tube is bulged outwardly in a middle section 6. This implies that the inner and outer diameters of the tube in the middle section 6 are larger than the diameters at both end sections 7. Additionally, several slits 8 are present at the end sections 7. These slits 8 may serve to fix the molded body 1 to other tube sections (not shown here) exhibiting complementary protrusions. The dimensions and the shape of the molded body 1 are chosen such that it can be easily adapted to further tube sections.

The slits 8 are directly formed during the injection molding process and are not introduced afterwards. Due to the slits 8 and the bulged shape in the middle section 6, cross sections perpendicular to the flow direction, differ in the middle section 6 of the tube and at the end sections 7 of the tube. Therefore, the body can hardly be formed in an extrusion process.

In one embodiment, the molded body shown in Figure 2 has an outer tube diameter of 20 mm, a length in the fluid flow direction of 30 mm and a wall thickness of 3 mm. In other embodiments, such a body can exhibit much smaller or larger dimensions, for example in the range of several meters.

Figure 3 is a view of an embodiment of an injection molded body 1, which can be used for heating a tube section (not shown), where a fluid can pass through. It comprises a curved surface 2 with an inner radius which is complementary to the dimensions of the tube section. Furthermore, it comprises two flat areas 3 and 4. These areas 3, 4 can be used to connect the element to a further heating element (not shown) such that a tube section is enclosed by the heating elements. Furthermore, both areas can comprise an electrical contact.

In one aspect, a PTC-ceramic element is part of a temperature measuring device. Due to its characteristic run of electrical resistivity as a function of temperature, the injection molded body may be the temperature sensor element or a part of it. The PTC-ceramic may have a shape similar to the heating elements shown in Figure 2 and Figure 3. It may also have a completely different shape.

In an embodiment, the PTC-ceramic element is part of a temperature control device. The injection molded body may be part of a self-regulating heating element. Here, it can be utilized that the current flow through the PTC-element leads to a rise of temperature. Due to the rise of temperature, the resistivity of the PTC-ceramics increases. When operated at constant voltage, the increase of resistivity in turn leads to a decrease of current flow. As a consequence, the heating of the ceramics is reduced again.

In one embodiment, the PTC-ceramic may be used as a heating element. Here, the thermal efficiency can be optimized by a molded body exhibiting a shape complementary to further elements in a heating device and connection devices which are integrated in the body.

In a further embodiment, an injection molded body described herein may be an element of an electrical circuit which protects other elements against a temperature overload. In a further aspect, it may protect other elements in an electrical circuit against current or voltage overload. The injection molded PTC-ceramic may also be part of an on/off switch in an electrical circuit.

Other implementations are within the scope of the following claims. Elements of different implementations may be combined to form implementations not specifically described herein.

## Claims

1. An injection molded body comprising:
a ceramic material with a positive temperature coefficient at least in a certain range of temperature, wherein the temperature coefficient is the relative change of the resistivity at a given temperature, containing less than 10 ppm of metallic impurities.

2. The injection molded body according to claim 1, having a Curie-temperature between -30 °C and 340 °C.

3. The injection molded body according to claim 1, having a resistivity at a temperature of 25 °C in the range of 3 Ωcm to 30000 Ωcm.

4. The injection molded body according to claim 1, which is made from a feedstock in an injection molding process, the feedstock comprising a material with a structure:
Ba_{1-x-y}MₓD_{y}Ti_{1-a-b}NₐM_{nb}O₃,
wherein
x = 0 to 0.5,
y = 0 to 0.01;
a = 0 t 0.01 and
b = 0 to 0.01;
wherein M comprises a cation of the valency two, D comprises a donor of the valency three or four and N comprises a cation of the valency five or six.

5. The injection molded body according to claim 1, wherein, for a straight line through the body, at least two cross sectional areas of the injection molded body that are perpendicular to the line cannot be accommodated on each other by a translation along the line.

6. The injection molded body according to claim 1 wherein, for a straight line through the body, at least two cross sectional areas of the injection molded body that are perpendicular to the line cannot be accommodated on each other by a translation and rotation along the line.

7. The injection molded body according to claim 1, further comprising at least one of a protrusion, a recess or a slit.

8. The injection molded body according to claim 1, further comprising at least one hole or channel.

9. The injection molded body according to claim 1, further comprising a device for connecting to a further body or a housing.

10. The injection molded body according to claim 1, further comprising at least one electrical contact.

11. A temperature measuring device comprising:
an injection molded body according to claim 1;
wherein the injection molded body is part of a temperature sensor element.

12. A temperature control device comprising:
an injection molded body according to claim 1;
wherein the injection molded body regulates current.

13. A device in an electrical circuit for protecting against current or voltage overload, the device comprising:
an injection molded body according to claim 1.

14. A Method of injection molding a body according to claim 1, the method comprising:
A) providing a feedstock for injection molding containing less than 10 ppm of metallic impurities;
B) injecting the feedstock into a mold;
C) removing a binder;
D) sintering a resulting molded body; and
E) cooling the molded body;
wherein tools used during the method that come into contact with the ceramic material have a low rate of abrasion such that the resulting molded body comprises less than 10 ppm abrasion-caused metallic impurities.

15. The method according to claim 14, wherein the tools are coated with a hard material, the hard material comprising tungsten carbide.

## Patentansprüche

1. Spritzgegossener Körper, umfassend:
ein Keramikmaterial mit einem positiven
Temperaturkoeffizienten in wenigstens einem bestimmten Temperaturbereich, wobei der Temperaturkoeffizient die relative Veränderung der Resistivität bei einer gegebenen Temperatur ist, enthaltend weniger als 10 ppm an metallischen Verunreinigungen.

2. Spritzgegossener Körper gemäß Anspruch 1 mit einer Curie-Temperatur zwischen -30 °C und 340 °C.

3. Spritzgegossener Körper gemäß Anspruch 1 mit einer Resistivität bei einer Temperatur von 5 °C in dem Bereich von 3 Ωcm bis 30000 Ωcm.

4. Spritzgegossener Körper gemäß Anspruch 1, der durch ein Spritzgussverfahren aus einem Ausgangsmaterial hergestellt ist, wobei das Ausgangsmaterial ein Material mit der Struktur:
Ba_{1-x-y}MₓD_{y}Ti_{1-a-b}NₐMn_{b}O₃
umfasst, wobei
x = 0 bis 0,5;
y = 0 bis 0,01;
a = 0 bis 0,01 und
b = 0 bis 0,01;
wobei M ein Kation mit der Wertigkeit zwei umfasst, D einen Donator mit der Wertigkeit drei oder vier umfasst und N ein Kation mit der Wertigkeit fünf oder sechs umfasst.

5. Spritzgegossener Körper gemäß Anspruch 1, wobei für eine gerade Linie durch den Körper wenigstens zwei Querschnittsflächen des spritzgegossenen Körpers, die senkrecht auf der Linie stehen, nicht durch eine Translation entlang der Linie aufeinandergepasst werden können.

6. Spritzgegossener Körper gemäß Anspruch 1, wobei für eine gerade Linie durch den Körper wenigstens zwei Querschnittsflächen des spritzgegossenen Körpers, die senkrecht auf der Linie stehen, nicht durch eine Translation und Rotation entlang der Linie aufeinandergepasst werden können.

7. Spritzgegossener Körper gemäß Anspruch 1, ferner umfassend wenigstens eines von einem Vorsprung, einer Vertiefung oder einem Schlitz.

8. Spritzgegossener Körper gemäß Anspruch 1, ferner umfassend wenigstens ein Loch oder einen Kanal.

9. Spritzgegossener Körper gemäß Anspruch 1, ferner umfassend eine Vorrichtung zum Verbinden mit einem weiteren Körper oder einem Gehäuse.

10. Spritzgegossener Körper gemäß Anspruch 1, ferner umfassend wenigstens einen elektrischen Kontakt.

11. Temperaturmessvorrichtung, umfassend:
einen spritzgegossenen Körper gemäß Anspruch 1;
wobei der spritzgegossene Körper Teil eines Temperatursensorelements ist.

12. Temperatursteuerungsvorrichtung, umfassend:
einen spritzgegossenen Körper gemäß Anspruch 1;
wobei der spritzgegossene Körper Strom reguliert.

13. Vorrichtung in einer elektrischen Schaltung zum Schützen gegen Strom- oder Spannungsüberlastung, wobei die Vorrichtung umfasst:
einen spritzgegossenen Körper gemäß Anspruch 1.

14. Verfahren zum Spritzgießen eines Körpers gemäß Anspruch 1, wobei das Verfahren umfasst:
A) Bereitstellen eines Ausgangsmaterials zum Spritzgießen, das weniger als 10 ppm an metallischen Verunreinigungen enthält;
B) Einspritzen des Ausgangsmaterials in eine Gussform;
C) Entfernen eines Bindemittels;
D) Sintern eines erhaltenen Gusskörpers; und
E) Abkühlen des Gusskörpers;
wobei bei dem Verfahren verwendete Werkzeuge, die in Kontakt mit dem keramischen Material kommen, eine niedrige Abriebrate aufweisen, so dass der erhaltene Gusskörper weniger als 10 ppm an abriebbedingten metallischen Verunreinigungen umfasst.

15. Verfahren gemäß Anspruch 14, wobei die Werkzeuge mit einem harten Material beschichtet sind, wobei das harte Material Wolframcarbid umfasst.

## Revendications

1. Corps moulé par injection comprenant :
un matériau céramique avec un coefficient de température positif au moins dans une certaine gamme de température, le coefficient de température étant la variation relative de la résistivité à une température donnée, contenant moins de 10 ppm d'impuretés métalliques.

2. Corps moulé par injection selon la revendication 1, ayant une température de Curie comprise entre -30 °C et 340 °C.

3. Corps moulé par injection selon la revendication 1, ayant une résistivité à une température de 25 °C dans la gamme de 3 Ωcm à 30 000 Ωcm.

4. Corps moulé par injection selon la revendication 1, qui est fabriqué à partir d'une charge dans un procédé de moulage par injection, la charge comprenant un matériau avec une structure :
Ba_{1-x-y}MₓD_{y}Ti_{1-a-b}NₐMn_{b}O₃,
dans laquelle
x = 0 à 0,5,
y = 0 à 0,01,
a = 0 à 0,01, et
b = 0 à 0,01 ;
dans laquelle M comprend un cation de valence deux, D comprend un donneur de valence trois ou quatre et N comprend un cation de valence cinq ou six.

5. Corps moulé par injection selon la revendication 1, dans lequel, pour une ligne droite à travers le corps, au moins deux sections transversales du corps moulé par injection qui sont perpendiculaires à la ligne ne peuvent pas s'adapter l'une à l'autre par une translation le long de la ligne.

6. Corps moulé par injection selon la revendication 1, dans lequel, pour une ligne droite à travers le corps, au moins deux sections transversales du corps moulé par injection qui sont perpendiculaires à la ligne ne peuvent pas s'adapter l'une à l'autre par une translation et une rotation le long de la ligne.

7. Corps moulé par injection selon la revendication 1, comprenant en outre une saillie, et/ou une encoche, et/ou une fente.

8. Corps moulé par injection selon la revendication 1, comprenant en outre au moins un trou ou canal.

9. Corps moulé par injection selon la revendication 1, comprenant en outre un dispositif de connexion à un autre corps ou un boîtier.

10. Corps moulé par injection selon la revendication 1, comprenant en outre au moins un contact électrique.

11. Dispositif de mesure de température comprenant :
un corps moulé par injection selon la revendication 1 ;
le corps moulé par injection faisant partie d'un élément de capteur de température.

12. Dispositif de régulation de température comprenant :
un corps moulé par injection selon la revendication 1 ;
le corps moulé par injection régulant un courant.

13. Dispositif dans un circuit électrique pour la protection contre une surcharge de courant ou de tension, le dispositif comprenant :
un corps moulé par injection selon la revendication 1.

14. Procédé de moulage par injection d'un corps selon la revendication 1, le procédé comprenant :
A) l'obtention d'une charge de moulage par injection contenant moins de 10 ppm d'impuretés métalliques ;
B) l'injection de la charge dans un moule ;
C) le retrait d'un liant ;
D) le frittage d'un corps moulé résultant ; et
E) le refroidissement du corps moulé ;
les outils utilisés pendant le procédé qui viennent en contact avec le matériau céramique ayant un faible taux d'abrasion de telle sorte que le corps moulé résultant comprend moins de 10 ppm d'impuretés métalliques induites par abrasion.

15. Procédé selon la revendication 14, dans lequel les outils sont recouverts d'un matériau dur, le matériau dur comprenant du carbure de tungstène.
